(19) Europäisches Patentamt
European Patent Office
Office européen des brevets

(11) Publication number: **0 010 000**
**B1**

(12) # EUROPEAN PATENT SPECIFICATION

(45) Date of publication of patent specification: **22.06.83**

(51) Int. Cl.$^3$: **C 09 D 5/34**, C 09 J 3/14, C 08 L 33/06

(21) Application number: **79302163.5**

(22) Date of filing: **10.10.79**

(54) **Mastic, caulking, sealant and adhesive compositions containing photosensitive compounds and method of reducing their surface tack.**

(30) Priority: **10.10.78 US 950200**

(43) Date of publication of application:
**16.04.80 Bulletin 80/8**

(45) Publication of the grant of the patent:
**22.06.83 Bulletin 83/25**

(84) Designated Contracting States:
**BE CH DE FR GB IT**

(56) References cited:
**FR - A - 2 374 390**
**US - A - 3 320 198**
**US - A - 3 878 075**

(73) Proprietor: **Rohm and Haas Company**
**Independence Mall West**
**Philadelphia, Pennsylvania 19105 (US)**

(72) Inventor: **Frankel, Lawrence Stephen**
**1110 Delene Road**
**Jenkintown PA 19046 (US)**
Inventor: **Clemens, David Henry**
**2000 Richard Road**
**Willow Grove PA 19090 (US)**

(74) Representative: **Angell, David Whilton et al,**
**Rohm and Haas Company Patent Department**
**Chesterfield House Bloomsbury Way**
**London WC1A 2TP (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 010 000 B1

# Mastic, caulking, sealant and adhesive compositions containing photosensitive compounds and method of reducing their surface tack

This invention is concerned with improved mastic, caulking, sealant or adhesive compositions containing a photo-sensitive compound which compositions yield a finished product whose surface becomes tack-free relatively quickly upon exposure to actinic radiation while the remainder of the product substantially retains its flexibility upon extended exposure to the source of active radiation. The invention is also concerned with the use of such compositions, particularly in a method of reducing surface tackiness.

Well known caulk or sealant compositions are exemplified in U.S. Patent No. 3,561,996. An example in that patent is a caulking composition of 82.6% solids as follows:

"(4) (a) A caulking composition of 82.6% solids is made up by mixing 430.17 lbs. of a 55% solids aqueous dispersion of an emulsion copolymer of 81.5% ethyl acrylate, 15% methyl methacrylate, and 3.5% itaconic acid, 9.46 lbs. of tert-octylphenoxypoly-(39)ethoxyethanol, 10.65 lbs. of sodium hexametaphosphate, 124.21 lbs. of a plasticizer for the copolymer (an oxypropylene derivative of m,p-cresylic acid), 26.91 lbs. mineral spirits, 1.27 lbs. of a 30% aqueous polymethacrylic acid, 692.06 lbs. of pigment grade calcium carbonate extender, and 17.22 lbs. of titanium dioxide pigment."

U.S. Patents 2,865,877 and 2,865,878 disclose as pigment dispersants (1) a water-soluble salt of a copolymer of maleic anhydride with an olefin such as diisobutylene, and (2) a water-insoluble ethylene oxide adduct of an alkyl phenol, the product being useful in coatings. The water-soluble salts are extremely hard and inflexible, and are unsuitable as major components of caulks.

U.S. Patent 2,889,297 discloses polyvinyl acetate adhesives plasticized with similar adducts of propylene oxide and alkyl phenols.

Ester type plasticizers in the form of oil modified alkyds have been disclosed for caulks, particularly solvent based caulks, as shown in U.S.—A—3,786,020, 3,919,146 and 3,759,915. U.S.—A—3,554,942 discloses aqueous sealant compositions comprising water-soluble acrylic copolymer and a water-soluble cellulose ether.

U.S.—A—2,986,507 discloses a polymerized, solid, fusible composition, prepared from acrylate and methacrylate monomers, containing thermal catalyst and a "photoinsolubilizer" which, prior to being subjected to ultraviolet irradiation, is soluble in organic solvents but after sufficient ultraviolet irradiation is insoluble in such solvents. The composition of the patent is employed in end applications such as making sheets, films, rods, granules, molds, casts, or coatings.

U.S.—A—3,661,744 discloses a photocurable liquid polymer composition including a liquid polymer component, a polythiol component, and a photocuring rate accelerator. Upon curing in the presence of actinic light, the products of the patent may serve as sealants, coatings, adhesives and molded articles.

U.S.—A—3,274,142, 3,297,630 and 3,966,794 disclose polyene-polythiol compositions containing a photocuring rate accelerator.

Generally, sealants require a delicate balance of properties to yield a finished product which will become tack free relatively quickly under cure conditions, for example under exposure to outdoor conditions, while still retaining its flexibility upon extended exposure to the same conditions. For most thermoset solvent based sealants, this balance of properties is principally achieved by controlling the crosslink density obtained with ambient cure processes. At high crosslink density, a sealant will undergo cure sufficiently quickly that it will demonstrate rapid loss of surface tack. However, high crosslink density in a sealant is usually accompanied by undesirable properties such as loss of elongation, stability, and low temperature flexibility and an undesirable increase in tensile strength and hardness. Thus, there exists a need in the art for sealant compositions which will become tack free quickly at the surface under cure conditions while still retaining throughout the bulk of the composition a relatively low level of cross-linking.

In US—A—3,320,198 latex paint compositions are disclosed comprising an aqueous acrylic polymer latex to which benzophenone is added in amounts of from 0.3 to 10% by weight based on the weight of the polymer for the purpose of providing a dirt repellent, relatively hard surface to the paint film whilst the remainder of the film retains the flexibility and tackiness needed for satisfactory crack resistance and adhesion.

In accordance with the present invention it has been found that benzophenone and other photosensitive benzophenone derivatives provide a tack-free surface in caulking compositions whilst retaining internal flexibility, but only at relatively low concentration.

According to the invention there is provided a putty-like mastic, caulking, sealant or adhesive composition comprising:

(a) from 10% to 90% by weight solids basis, of an addition polymer having a backbone of copolymerized ethylenically unsaturated monomers, one of which is an unsaturated carboxylic acid

monomer, a portion of said carboxylic acid monomer optionally being modified by having pendant groups selected from ester-amide and ester groups, the polymer backbone having units of the formula:

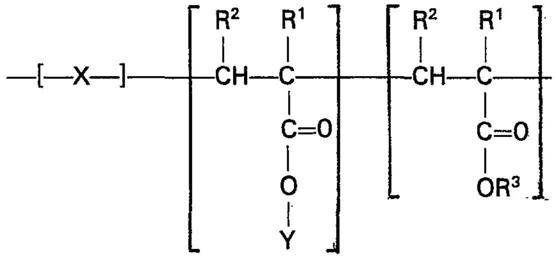

I

wherein

$R^1$ is H, $(C_1—C_5)$ alkyl, halogen, $—CH_2COOR^8$, $—COOR^9$, or $—CH_2COOH$, wherein $R^8$ and $R^9$ are $(C_1—C_8)$ alkyl;

$R^2$ is H, —COOH, $—CONH_2$, or $—COOR^{10}$, wherein $R^{10}$ is $(C_1—C_8)$ alkyl;

$R^3$ is H or $(C_1—C_8)$ alkyl with the proviso that at least some of the $R^3$ groups are H;

X represents units derived from at least one other vinyl monomer and is optional; and

Y is $(—R^4—NR^5—CO—R^6)$ or $—(—R^7—O—CO—R^6)$ wherein $R^4$ is an alkylene radical having from 2 to 18 linear carbon atoms between the nitrogen and the oxygen atoms; $R^5$ is H or $(C_1—C_8)$ alkyl; $R^6$ is an unsaturated, oxidatively air-curable alkenyl radical; and $R^7$ is $—CH_2—CH(OH)—CH_2—$ or $—CH(CH_2OH)—CH_2—$;

the units in parenthesis being in any order, which polymer, when it is so modified, is derived from the esterification of some of the carboxyl groups in the backbone by an unsaturated fatty acid hydroxyamide or unsaturated fatty acid glycidyl ester, the amount of unsaturated carboxylic acid in the backbone, before or without modification, being from 0.25% to 40 weight % on the basis of copolymerized monomers, the molar ratio of free carboxyl groups in the backbone before or without modification thereof to the hydroxyamide or glycidyl ester being from 1:0.9 to 1:0.2, the polymer backbone having from 0% to no more than 10% by weight of the units having the formula

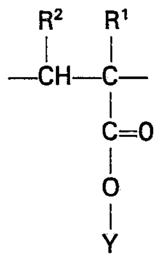

II

the Tg of the backbone polymer free of pendant ester-amide or ester groups being below 0°C;

(b) from 90% to 10% by weight, solids basis, of one or more of the following: an emulsifier, a dispersant, an organic solvent, a base, a pigment, a filler, a dye, a defoamer, a thickener, a polyvalent metal-containing complex or salt as a drier, an adhesion promoter, or a plasticizer; and

(c) from 0.01 to 1% based on the weight of polymer solids of a photosensitive compound of the formula

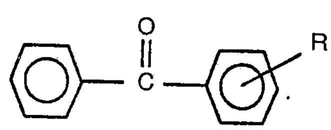

wherein R is H, $4—CH_3$, 4—OH, $4—NH_2$, 4—Cl, 4—COOH, $4—COOCH_3$, 2—COOH, $2—COOCH_3$, $2—NH_2$, 2—OH, $3—NO_2$, 3—COOH or $3—COOCH_3$.

More preferably the photosensitive compound is a para-substituted benzophenone, especially where R is H, $4—CH_3$, 4—OH, $4—NH_2$, 4—Cl, 4—COOH or $4—COOCH_3$. Benzophenone itself is most preferred for its availability and performance.

In accordance with the invention it has been found the addition of such compound imparts to the cured mastic, caulking, or sealant composition upon exposure to a source of actinic radiation the property wherein the cured surface of the composition is rendered tack free while the remainder of the composition retains its flexibility and wherein the cured surface is rendered substantially mildew resistant.

Example of $R^1$ and $R^2$ in the formula of the binder polymers used in accordance with this invention are:

| $R^1$ | $R^2$ | Acid for carboxyl source |
|---|---|---|
| H | H | acrylic |
| $CH_3$ | H | methacrylic |
| H | COOH | maleic, fumaric |
| H | $CONH_2$ | maleamic |
| Cl | COOH | chloromaleic |
| $CH_2COOCH_3$ | H | methyl acid itaconate |
| $CH_2COOH$ | H | itaconic |
| $CH_2COOH$ | COOH | aconitic |
| H | $COOCH_3$ | half ester of maleic |

Preferred binder polymers are rubbery polymers containing 1 to 5% by weight of carboxylic acid units and where $R^1$ is H or ($C_1$—$C_5$) alkyl, such as methyl, $R^2$ is H and when units (B) are present they comprise no more than 5% by weight and are provided by esterification in a mole ratio of from 1:0.7 to 1:0.3, and when Y is —$R^4$—$NR^5$—CO—$R^6$, $R^5$ is methyl and $R^6$ contains 18 carbon atoms or less, and, when Y is —$R^7$—O—CO—$R^6$, $R^6$ contains from 10 to 22 carbon atoms. More preferably $R^1$ is H or methyl, Y is —$R^4$—$NR^5$—CO—$R^6$ wherein $R^4$ contains 2 or 3 carbon atoms in a chain joining the nitrogen and oxygen atoms, $R^5$ is methyl and $R^6$ contains 18 carbon atoms or less and said mole ratio is from 1:0.6 to 1:0.4. $R^6$ is preferably derived from one or more of oleic, linoleic and linolenic acids.

The matter in the right-hand parenthetical group, of course, represents that portion of the addition polymerized polymer backbone having free carboxyl groups as well as carboxyl groups which are esterified by the various alcohols conventionally used. The optional portion —X—, is derived from any of the well-known unsaturated addition polymerizable vinyl monomers, defined below, in addition to those which give units of formula II, above.

The backbone polymer, before or without esterification by the hydroxyamide, contains units of the formula

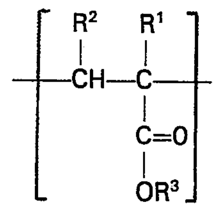

and optionally —[—X—]—
the fatty acid amide having the formula

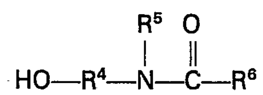

wherein the symbols used have the same meanings as given above.

The backbone polymer, before or without esterification by the glycidyl ester, contains units of the formula

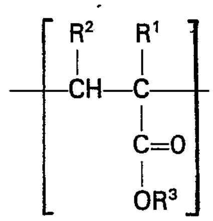

and optionally —[—X—]—
the glycidyl ester having the formula

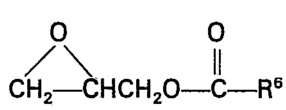

wherein the symbols used have the same meaning as given above.

An essential characteristic of the ultimate elastomeric polymer obtained by esterifying pendant —COOH groups of the backbone by reaction with the unsaturated fatty acid hydroxyamide or glycidyl

ester, as concerns caulks, is that there be less than about 10 percent, and more preferably less than about 5 percent, on a weight basis, of the groups represented by the formula:

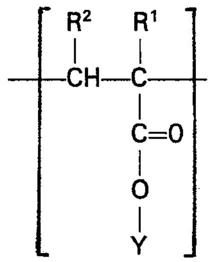

wherein $R^1$, $R^2$, and Y are as above.

If this criterion is not observed, over a long period of time the caulk may become too brittle or hard for proper expansion and contraction of abutting surfaces in contact with a single caulk bead, or the bead may become so hard as to preclude easy repair. Without a silane of the type used in solvent-based caulks, wet adhesion on upright surfaces may be defective, especially if more than 5 percent of said groups by weight is present.

The backbone polymer is a water-insoluble vinyl addition polymer containing the requisite proportion of carboxyl (—COOH) groups as described herein. The backbone polymers per se are well known in the art and form no part of the present invention.

The proportions of monomers in the backbone are such that there is at least 0.25 percent and no more than 40 percent, preferably less than 25 percent, of unsaturated carboxylic acid, by weight, in the monomers going into said backbone polymer. An especially preferred range is from about 1 percent to 5 percent, and the optimum is considered to be in the range of 1.5 percent to 3.5 percent. In reacting the hydroxyamide or glycidyl ester of the unsaturated fatty acid with free carboxyl (—COOH) groups in the backbone polymer, the mole ratio of —COOH: amide or ester is in the range of from 1:0.2 to 1:0.9, preferably from 1:0.3 to 1:0.7. A particularly useful range is from 1:0.4 to 1:0.6. It is advantageous to have a substantial proportion of free carboxyl groups associated with a minimum of the drying oil functionality for proper adhesion and for maximum longterm flexibility necessary in the cured caulks.

In the backbone, "hard" monomers such as styrene or methyl methacrylate are useful in the range of 0 to 75 percent, preferably 5 to 25 percent, with "soft" monomers such as ethyl or butyl acrylate forming from about 75 percent to about 99.75 percent of the total monomers, preferably 70 to 94 percent.

The preferred backbone polymers are those of vinyl addition polymer type, including as an essential component, the $\alpha,\beta$-unsaturated carboxylic acid, preferably acrylic acid or methacrylic acid. Other useful compolymerizable acids are named in U.S. Pat. Nos. 3,098,760 and 3,261,796, additional examples being given below.

To amplify, the unsaturated carboxylic acid may be a simple monocarboxylic acid, a polycarboxylic acid, or may be a partial ester or half amide of such $\alpha,\beta$-unsaturated polycarboxylic acids, and salts thereof with a volatile base such as ammonia, or with a volatile water-soluble amine such as dimethylamine, triethylamine, triethanolamine, morpholine, N-methyl morpholine, picoline, and the like. Examples of copolymerizable ethylenically unsaturated monocarboxylic or polycarboxylic acids are sorbic, acryloxyacetic, acryloxypropionic, cinnamic, vinyl furoic, $\alpha$-chlorosobic, methacryloxypropionic, methacryloxyacetic, p-vinylbenzoic, acrylic, methacrylic, maleic, fumaric, aconitic, atropic, crotonic, and itaconic acid, or mixtures thereof, with itaconic acid and the $\alpha,\beta$-unsaturated monocarboxylic acids, particularly methacrylic acid and acrylic acid, being preferred. Other copolymerizable acid monomers include the alkyl half esters or partial esters of unsaturated polycarboxylic acids such as of itaconic acid, maleic acid, and fumaric acid, or the partial amides thereof. Preferred half esters are the lower alkyl ($C_1$ to $C_6$) esters such as methyl acid itaconate, butyl acid itaconate, methyl acid fumarate, butyl acid fumarate, methyl acid maleate, and butyl acid maleate. Such partial esters and partial amides are considered to be "$\alpha,\beta$-unsaturated monocarboxylic acids," and the term as used herein includes such esters and amides.

The term "vinyl monomer" as used herein means a monomer comprising at least one of the following groups:

| | |
|---|---|
| vinylidene | $CH_2=$ |
| vinyl | $CH_2=CH—$, and |
| vinylene | $—CH=CH—$, |

whether homopolymerizable or not, giving units corresponding to X and to formula II. Examples are the $\alpha,\beta$-ethylenically unsaturated monocarboxylic acids and esters and amides thereof, $\alpha,\beta$-ethylenically unsaturated aldehydes, $\alpha,\beta$-ethylenically unsaturated dicarboxylic acids and esters, amides, half esters, and half amides thereof, $\alpha,\beta$-ethylenically unsaturated nitriles, hydrocarbons such as $\alpha$-olefins,

conjugated diolefins vinylaryl compounds, vinyl alkyl ethers, vinyl halides, vinylidene halides, vinyl sulfides, vinyl acryloxy compounds (esters of saturated carboxylic acids and ethylenically unsaturated alkanols), vinyl amines and salts thereof, vinyl ureido monomers, vinyl compounds having heterocyclic nitrogen-containing (HN<) groups, and halogen, hydroxyalkyl, or aminoalkyl substituted derivatives thereof, whether homopolymers or copolymers. The vinyl polymers and methods for their preparation form no part of the present invention, and any such polymer may be treated in accordance with the present invention. For examples of well-known vinyl polymers and methods of preparing the same, see "Polymer Processes," Schildknecht, Interscience, N.Y. (1956), pp. 111—174. Mixtures of different polymers are useful.

Specific examples of suitable monomers which may be copolymerized to obtain the water-insoluble polymers for use according to the invention in addition to the unsaturated acid monomers and esters thereof with alkanols having one to 20 carbon atoms, such as methanol, ethanol, butanol, pentadecanol and the like, are acrolein, methacrolein, ethylene, propylene, isobutene, butadiene, isoprene, chloroprene, styrene, vinyltoluene, vinyl methyl ether, vinyl isobutyl ether, vinyl chloride, vinyl bromide, vinylidene chloride, vinyl sulfide, vinyl acetate, vinyl propionate, the vinyl pyridines, primary amino compounds such as $\beta$-aminoethyl vinyl ether, aminopentyl vinyl ether, secondary amino-containing compounds such as secondary amyl t-butyl amino ethyl methacrylate, tertiary amino-containing compounds such as t-dimethylaminoethyl methacrylate, and the allied amine salts such as the chloride or hydroxide, ureido monomers such as are disclosed in U.S. Pat. Nos. 2,881,155 to Hankins, 3,300,429 to Glavis and Keighly, and 3,356,627 to Scott, examples being $\beta$-ureidoethyl acrylate, $\beta$-(N,N'-ethyleneureido)ethyl acid maleate, $\beta$-ureidoethyl vinyl ether, N-vinyl-N,N'-ethyleneurea, N-vinyloxyethyl-N,N'-ethyleneurea, N-methacrylamidomethyl-N,N'-ethyleneurea, and N-dimethylaminoethyl-N'-vinyl-N,N'-ethyleneurea, $\beta$-hydroxyethyl methacrylate, N-hydroxyethylacrylamide, N-methylolacrylamide, and N-(dimethylaminoethyl)acrylamide. Copolymers and graft, block, or segmented polymers are included. Conventional methods of obtaining the backbone polymers are utilized.

Preferred vinyl monomers in addition to the acid, include one or more of an ester of an $\alpha,\beta$-unsaturated carboxylic acid, or, when those from which X is derived are used, an unsaturated nitrile, a vinyl halide, a vinylidene halide, a vinyl aromatic a vinyl alcohol ester, or an unsaturated hydrocarbon.

As is described below, these vinyl monomers include the acids mentioned above and esters thereof, as well as known "soft" and "hard" monomers.

Another of the important, and at times essential monomers, in addition to the acid monomer, usually utilized in a substantial proportion to prepare the backbone polymer, is a resiliency-imparting or "soft" monomer which may be represented by the following formula:

$$H_2C{=}\overset{\overset{\displaystyle R^o}{|}}{C}{-}\overset{\overset{\displaystyle O}{\|}}{C}{-}OR^{11}$$

wherein R° is H or alkyl having 1 to 4 carbon atoms and $R^{11}$ is the straight chain or branched chain radical of a primary or secondary alkanol, alkoxyalkanol or alkylthiaalkanol, and having up to 14 carbon atoms, examples being ethyl, propyl, n-butyl, 2-ethylhexyl, heptyl, hexyl, octyl, propyl, 2-methylbutyl, 1-methylbutyl, butoxybutyl, 2-methylpentyl, methoxymethyl, ethoxyethyl, cyclohexyl, n-hexyl, isobutyl, ethylthiaethyl, methylthiaethyl, ethylthiapropyl, n-octyl 6-methylnonyl, decyl and dodecyl, said radicals $R^{11}$, when alkyl, having from two to about 14 carbon atoms, preferably from three to 12 carbon atoms, when R° is H or methyl. When R° is alkyl and $R^{11}$ is alkyl, $R^{11}$ should have from 6 to 14 carbon atoms and when R° is H and $R^{11}$ is alkyl, $R^{11}$ should have from two to 12 carbon atoms, in order to qualify as a "soft" monomer.

Other ethylenically unsaturated copolymerizable vinyl monomers, the homopolymers of which have a much higher $T_g$, are used in combinations with the above mentioned soft monomers provided they do not adversely affect the desired properties of the caulk (e.g. unduly raise the overall $T_g$). The "hard" acrylics may be represented by the formula:

$$H_2C{=}\overset{\overset{\displaystyle R^o}{|}}{C}{-}\overset{\overset{\displaystyle O}{\|}}{C}{-}OR^{22}$$

wherein R° is as above. $R^{22}$ is preferably alkyl and is methyl or alkyl having from 13 to 20 carbon atoms when R° is H, and is alkyl of from one to five carbon atoms or alkyl of from 15 to 20 carbon atoms when R° is methyl. It can be seen from above that for alkyl acrylates and alkyl methacrylates the $T_g$ at first decreases with an increased chain length of the alkyl group and then the $T_g$ again increases, i.e., both "hard" and "soft" monomers are known to occur in each group of monomers. Examples of these "hard" monomers and other "hard" monomers include: methyl acrylate, acrylamide, vinyl acetate, tetradecyl acrylate, pentadecyl acrylate, methyl methacrylate, ethyl methacrylate, t-butyl acrylate, butyl

methacrylate, styrene, pentadecyl methacrylate, vinyl toluene, methacrylamide, and N-methylolacrylamide.

Preferably the binder polymer contains a major proportion (more than 50%) of units of at least one ester of acrylic acid with an alkanol containing from 1 to 4 carbon atoms and a minor proportion (less than 50%) of units of one or more of at least one ester of methacrylic acid with an alkanol containing from 1 to 4 carbon atoms, acrylonitrile, methacrylonitrile, acrylic acid and methacrylic acid.

As is known, for a given number of carbon atoms in the alcohol moiety, the extent and type of branching markedly influences the $T_g$, the straight chain products giving the lower $T_g$.

As is apparent, an important property of the backbone polymer is the $T_g$ thereof, and consequently the selection of monomers and proportions thereof depends upon their influence on the $T_g$. The $T_g$ of the polymer must be below 0°C, (i.e., it must give a rubbery product) and is more preferably below −10°C. The modified backbone polymer containing the pendant ester groups must also have the same $T_g$ requirements. "$T_g$" is a conventional criterion of polymer hardness and is described by Flory, "Principles of Polymer Chemistry", pp 56 and 57 (1953), Cornell University Press. See also "Polymer Handbook", Brandrup and Immergut, Sec. III, pp 61—63, Interscience (1966). While actual measurement of the $T_g$ is preferred, it may be calculated as described by Fox, Bull. Am. Physics Soc. 1,3, p. 123 (1956). Examples of the $T_g$ of homopolymers and the inherent $T_g$ thereof which permits such calculations are as follows:

| Homopolymer of | $T_g$ |
|---|---|
| n-octyl acrylate | −80°C |
| n-decyl methacrylate | −60°C |
| 2-ethylhexyl acrylate | −70°C |
| n-butyl acrylate | −56°C |
| octyl methacrylate | −20°C |
| n-tetradecyl methacrylate | −9°C |
| methyl acrylate | 9°C |
| n-tetradecyl acrylate | 20°C |
| t-butyl acrylate | 43°C |
| methyl methacrylate | 105°C |
| acrylic acid | 106°C |

These or other monomers are blended to give the desired $T_g$ of the copolymer.

The polymeric backbone is desirably obtained by solution polymerization of one or more of the ethylenically unsaturated acids with other unsaturated monomers including, among the more preferred vinyl monomers, the esters of acrylic acid or methacrylic acid with benzyl alcohol, phenol, or a saturated monohydric aliphatic alcohol, especially an alkanol, having one to 18 carbon atoms, such as cyclopentanol, cyclohexanol, methanol, ethanol, n-propanol, isopropanol, n-butanol, methoxyethanol, ethoxyethanol, methoxyethoxyethanol, ethoxy-ethoxyethanol, isobutanol, sec-butanol, tert-butanol, any of the pentanols, hexanols, octanols, decanols, dodecanols, hexadecanols, and octadecanols, bearing in mind the required $T_g$ and acid monomer. Other preferred comonomers include acrylonitrile, methacrylonitrile, vinyl acetate, styrene, vinyl toluene (o-, m-, or p-), vinyl chloride or vinylidene chloride, to give the X in the foregoing formula. Blends of copolymers may be used.

High molecular weight polymers, e.g. 10,000 to several million, obtained by emulsion or solution polymerization or other methods, and of water-insoluble character when in acid form, are used as the backbone polymer. Preferably, the backbone polymer has a molecular weight of 10,000 to 600,000.

The compositions of the invention may be applied to a wide variety of substrates, including siliceous substrates such as glass sheets, fiberglass textiles, asbestos sheets, asbestos cement products, concrete, stone, stucco, slate, sandstone, granite, ceramics, and porcelain; also fiber reinforced plastic articles such as canoes, boathulls, or other formed articles made out of fiber-glass reinforced polyesters or other plastic materials; metal such as aluminum, galvanized steel, steel, iron, brass; wood and other suitable building and/or structural materials; insulating materials such as polyurethane and polystyrene foam; metal oxide layers such as those of aluminum oxide and iron oxide; leather; textiles of cellulose such as of cotton, linen, silk, wool, rayon, cellulose esters such as cellulose acetate, nylons, polyesters such as polyethylene glycol terephthalate, acrylonitrile polymers, vinylidene chloride polymers and other vinyl or acrylic ester polymers; films, pellicles, sheets and other shaped articles of various plastic systems such as of cellulose ethers or esters including hydroxyethyl cellulose, methyl cellulose, cellulose acetate, cellulose acetate butyrate, polyesters such as polyethylene glycol terephthalate, nylons, vinyl chloride or vinylidene chloride polymers and copolymers, methyl methacrylate polymers and copolymers, aminoplast or phenoplast resin, organopolysiloxane resins or rubber.

The caulks, mastics, or sealants of the present invention are particularly valuable in that they can be used directly on most of the substrates without the need of a priming coat.

The solvents used in the polymerization may be such organic solvents as benzene, toluene,

xylene, solvent naphthas of aliphatic, aromatic, or naphthenic type, such as mineral spirits, acetone or dioxane. Of course, other modes of polymerization can be used. The amount of solvent in the final caulk, sealant, or mastic is from 0 percent to 50 percent based on total weight. Preferably, it is from 5 percent to 20 percent for caulks and up to 50 percent for mastics.

For aqueous latex based mastics, caulks, or sealants of the present invention, the solids content is from about 50% to about 90% by weight, preferably from about 60% to about 85%. Solids content is kept as high as possible while yet achieving a useful consistency.

If the solvent is a reactive or curable solvent such as a drying oil or a liquid polymerizable material, solids content may even be 100%.

Component (b) is present in an amount of from 10 percent to 90 percent by weight of the total solids in the composition depending upon factors such as the consistency desired, the presence or absence of thickening agents and the amount and identity of solvent utilized. Suitable fillers include calcite, limestone, mica, talc, asbestos fiber or powder, diatomaceous earth, barytes, alumina, slate flour, calcium silicate, clay, colloidal silica, magnesium carbonate and magnesium silicate. The amounts of solvent, if any, filler, and polymer solids are such as to give the caulking composition a dough-like consistency.

The weight ratio of inorganic pigment and/or filler to binder is from 0:1 (clear or translucent, for instance) to 5:1, preferably 1:1 to 4:1.

Among the drying oils from which the drying oil fatty acid amide may be derived are linseed, tung, tall, safflower, isano, soya, dehydrated castor, maleinized or fumarized linseed, oiticica, palm, peanut, corn, walnut, menhaden, dehydrogenated castor, and cottonseed oils, and similar oils, as well as acids not derived from drying oils and of a synthetic origin, with a carbon chain preferably of about 20 carbon atoms or less and having unsaturation therein which can be caused to air cure in a manner analogous to linseed oil. The preferred oils are those which contain oleic and linoleic acids or linoleic and linolenic acids as the predominant ones.

The preparation of the fatty acid hydroxyamide is carried out by well-known procedures as is the esterification of the carboxyl groups on the polymeric backbone by the hydroxyamide. Exemplary of publications describing these are The Journal of the American Oil Chemists' Society, Volume 46, pages 355—364, published in 1969, which discloses the use of diethanolamine to produce fatty acid hydroxyamide rather than the monoethanolamine which is preferred in the present invention, DE—C—1,940,471, and BE—A—757,271 and U.S.—A—3,590,016, the latter two relating to hard coatings such as paints. The U.S. and Belgian patents are to the same type of polymer generally, although the products taught therein have several defects making them unsuitable for many uses including caulking or sealing compositions. For example, all of the backbone polymers disclosed are brittle or hard polymers. Thus, it appears that the softest polymer backbone, of the patent examples, would be of styrene and/or methacrylate that would have a glass transition temperature ($T_g$) of 100°C. or above. Polymers of this hardness, at ambient temperatures, would be useless for caulks or sealants, even if extensively plasticized.

The preparation of the fatty acid glycidyl ester is carried out by well-known procedures as is the esterification of the carboxyl groups on the polymeric backbone. Exemplary of publications describing the preparation of a similar polymer is GB—A—1,060,711. The glycidyl ester may be prepared in the manner taught by U.S.—A—3,366,706. The British patent is to the same type of polymer generally, although the products taught therein have several defects making them unsuitable for many uses including caulking or sealing compositions. For example, all of the backbone polymers disclosed are brittle or hard polymers. Thus, it appears that the softest polymer of the British patent is described in Example 6, and that would have a glass transition temperature ($T_g$) of about 70°C. The most serious disadvantage is a lack of any recognition of the importance of free carboxyl groups. Most of the examples utilize the glycidyl ester in molar excess over the carboxyl groups. Some examples, including Examples 2, 5, 6, 7 and 13 have a very slight excess of carboxyl groups over epoxy groups reacted therewith, but there is advanced no reason therefor. Most importantly, the only two examples relating to the use of unsaturated glycidyl esters, Examples 14 and 15, teach directly away from the present invention in requiring that approximately a 100 percent molar excess of the glycidyl ester be utilized over that required to react with all of the carboxyl groups in the polymer. One of the most important disadvantages of this lack of acid groups is that such polymers would be quite deficient in adhesion to various substrates.

When modifying the backbone polymer with the glycidyl ester of an unsaturated fatty acid it is essential that the preformed polymer backbone contains carboxyl groups for reaction therewith. The simultaneous polymerization of carboxyl-containing monomers such as acrylic acid with glycidyl esters such as glycidyl methacrylate is impractical because they react and crosslink in situ. Also unsatisfactory is the scheme of forming a polymer with glycidyl groups and then esterifying these with the unsaturated fatty acid. This again results in a lack of free carboxyl groups which has a number of disadvantages. It is also important to limit the number of ester groups, because for every esterified carboxyl, a hydroxyl group is formed. The more of these that are present the more likely the polymer is to be sensitive to water in vapor or liquid form.

Any of the conventional driers may be included in the compositions, such as the linoleates,

naphthenates, and resinates of cobalt, zirconium, manganese, lead, cerium, chromium, iron, nickel, uranium, and zinc are suitable.

The amount of drier based on the weight of the glycidyl ester or hydroxy amide of formula I can be as low as 0.05 percent to as high as 10 percent. Best results are obtained with combinations of driers, particularly zinc naphthenate and cobalt naphthenate in quite small amounts, for example, from 0.05 percent to 2.0 percent of the zinc naphthenate are particularly useful. The amount of drier utilized should be such as to promote oxidative cure and to minimize dirt pickup by the finished caulk.

It is helpful, in some cases, to utilize a silane to improve wet adhesion to glass by the caulk and also, at times, to utilize plasticizers for providing low temperature flexibility, for example, at −15°F (−26°C). Suitable silanes include vinyltriethoxysilane, γ-methacryloxypropyltrimethoxysilane, γ-mercaptopropyltrimethoxysilane, γ-glycidoxypropyltrimethoxysilane, β-(3,4-epoxycyclohexyl)ethyltrimethoxysilane, γ-aminopropyltriethoxysilane, and N-(dimethoxymethylsilylisobutyl)ethylenediamine. The silane concentration may be between 0.05 percent and 0.5 percent. Higher amounts may be used but do not result in proportional improvements in adhesion. Suitable plasticizers include well-known phthalate plasticizers, oil-modified sebacic acid alkyds, unmodified sebacic acid alkyds and oil-modified maleic polyesters. It is preferred to use "internal" plasticization by means of "soft" monomers in the backbone. This provides a product which can be used with less solvent, thus minimizing shrinkage.

Although it is not fully understood, there appears to be a relationship between the type of composition (organic solvent-based or water-based) and the optimum amount of photosensitive compound, such as benzophenone, to obtain surface cure. In solvent-based sealants and mastics the amount of photosensitive compound is preferably from 0.01 to 0.4% by weight of polymer.

The compositions of the invention may be exposed to any form of actinic radiation. Of course, outdoor exposure is the most convenient source of radiation but in addition or alternatively any of the well-known artificial sources of actinic radiation may be used.

Some preferred embodiments of the invention will now be more particularly described in and by the following examples, in which all parts and percentages are by weight unless otherwise specifically noted.

Preparation of samples

The addition of a photosensitizer to either a binder or formulated product is generally performed by post addition of a concentrated solution of a photosensitizer in one or more of the following solvents: xylene, ethanol, methyl ethyl ketone or N,N-dimethylformamide. The choice of solvent is governed by the solubility of the photo-sensitizer and subsequent compatibility with the polymer binder or formulated product. Alternatively, the photosensitizer may be directly added to the polymer or during the preparation of a sealant, mastic, glazing, patching or adhesive product. Various test methods for evaluating caulking and sealant compositions are described in Resin Revue 1966, Vol. XVI no. 3, published by Rohm and Haas Co.

Method of Evaluation

After addition of the photosensitizer to the polymer binder or formulated product the resultant material is skived, tooled, brushed or poured into slabs which are subsequently placed under exterior exposure cure conditions. A duplicate set of samples is generally retained in the laboratory as a control. If the material is a formulated sealant, it is generally evaluated via the tack free time test described in Federal Specification TTS-00230C (section 4.3.6.). This is a Pass/Fail test and as such, has limited utility. The relative surface tack of the material under study is evaluated by touch rating the surface of the material in question. Samples are evaluated versus a control and rated as P=poor, F=fair, G=good, or E=excellent. Relative tack free time and mildew growth, together, are evaluated versus a control and rated according to the scale 0=poor to 10=excellent. Sealant gunnability (extrusion rate is also run as described in Federal Specification TTS-00230C (section 4.3.3.).

4.3.6 Tack free time

Accessory materials required are: (1) brass weight 30 g approximately 41.3 mm×25.4 mm×5.1 mm (1-5/8 by 1 by 1/5 inch); (2) 2 polyethylene strips (clear), approximately 101.6×0.102±0.051 mm (4 by 0.004±0.002 inch); (3) materials listed in 4.3.4.1. The sample is prepared as described in 4.3.4.1. After the speciment has been exposed in air for 72 hours at standard conditions (25°C±1, relative humidity 50 I 5%), the polyethylene film is pressed on the top surface of the compound with the brass weight (30 g) for 30 seconds. The film is then progressively withdrawn at right angles to the compound. The sample meets the requirement if the film pulls off from the specimen without any sealant adhering to it.

4.3.3 Extrusion rate (Consistency)

Accessory materials required are: (1) 170.5 ml (6-ounce) capacity air powered caulking gun ("Semco, Pyles", or similar types); (2) Standard 170.5 ml (6 ounce) polyethylene cartridges and plunger with front opening of 13.72±0.051 mm (0.540±0.002 inch), inside diameter; (3) 344.7 $KNm^{-2}$ (50 psi) air supply; (4) pint (0.47 l) container; (5) timer with second hand. A sufficient amount of

the compound is placed into the 170.5 ml cartridge to completely fill the cartridge with plunger in place. The filled cartridge is set aside, vertically, at standard conditions for 3 hours. At the end of 3 hours, with no nozzle added to the cartridge, the compound is gunned at 344.7 $KNm^{-2}$ pressure into the empty pint container. The time in seconds, it takes to empty the cartridge is determined.

Polymers employed in the Example
A=BA/EA/AN/AA/N-[β-(α-Methacryloxyacetamido)ethyl]ethyleneurea (71/22.5/5.0/1.0/1.0)
B=BA/MMA/AN/MAA (71/24/2.5/2.5), 82% solids in xylene
C=100 Polymer A//2 N-methyl-N-(2-hydroxyethyl)-linseed oil amide
D=BA/IPOXA (95/5)//MAn/tung oil (2.4/1)
E=82 (BA/*t*-BAEMA=98/2)//18 (*i*-BMA/MMA=96.3/3.7)
F=95.7 BA/AN/AA/N-[β-(α-Methacryloxyacetamido)ethyl]ethylene urea (95/2.5/1.5/1.0)//4.7 N-methyl-N-(2-hydroxyethyl)-linseed oil amide
G=BA/AN/MMA/N-[β-(α-Methacryloxyacetamido)ethyl]ethyleneurea (95.4/2.0/1.6/1.0), 65% solids aqueous latex.
H=EA/MMA/Itaconic Acid (87.5/10.0/2.5), 55% solids aqueous latex.
I=BA/MMA/MAA/N-{β-(α-Methacryloxyacetamido)ethyl}-ethylene urea (51/46.5/1.5/1.0).
BA=butyl acrylate
EA=ethyl acrylate
AN=acrylonitrile
MMA=methyl methacrylate
MAn=methacrylonitrile
MAA=methacrylic acid
AA=acrylic acid
IPOXA=isopropyloxazolidinylethyl acrylate
*t*-BAEMA=*t*-butylaminoethyl methacrylate
BMA=butyl methacrylate

Example 1

This example shows the effect on curing under outdoor exposure conditions of various polymers.

0.5 g of a stock solution of benzophenone (7.9 g) in xylene (10.0 g) is post added to 20 g of each of the acrylic binders indicated in Table I. The polymer blends are mixed, poured into molds 3.18 mm (1/8") deep, placed under exterior (outdoor) exposure cure conditions and subsequently examined on a periodic basis for relative surface tack. Appropriate controls which do not contain benzophenone are included for comparison. The results set forth in Table I show that, relative to the controls, the acrylic binders show a dramatic reduction in surface tack under exterion exposure cure conditions.

TABLE I
Effect of post-addition of benzophenone to polymeric binders

| Polymer | % Solids | % Benzophenone | Relative surface tack under outdoor exposure condition |
|---|---|---|---|
| A | 83 | 0.0 | 2.5 hrs P, 4 days P |
| | | 2.2 | 2.5 hrs E, 4 days E |
| B | 83 | 0.0 | 2.0 hrs $F^+$ |
| | | 2.2 | 2.0 hrs E |
| C | 83 | 0.0 | 2.5 hrs P, 4 days P |
| | | 2.2 | 2.5 hrs E, 4 days E |
| D | 95 | 0.0 | 4.5 hrs $P^-$, 1 day $P^-$, 3 days $P^-$ |
| | | 2.2 | 4.5 hrs P, 1 day $F^-$, 3 days G |
| E | 41 | 0.0 | 4.5 hrs P, 1 day $F^+$ |
| | | 2.2 | 4.5 hrs $E^-$, 1 day E |
| F | 55 | 0.0 | 4.5 hrs $F^+$ |
| | | 2.2 | 4.5 hrs E |

[1]Weight % based on total of formulation.

Example 2

This example shows the effect on curing under outdoor exposure conditions of certain polymers with which are blended benzophenone as described in example 1 and, further, varying amounts of certain driers. The data in Table II indicate that the effect of benzophenone is not related to the presence of pendant oil functionality or paint drier metal catalysts.

TABLE II

Effect of benzophenone and driers on the surface tack of polymeric binders under outdoor exposure conditions

| Polymer | % Cobalt[1] | % Zinc[2] | % Benzophenone[3] | Relative tack under exposure conditions[4] |
|---|---|---|---|---|
| C | 0.000 | 0.00 | 0.0 | P |
| | 0.015 | 0.00 | 0.0 | P |
| | 0.015 | 0.10 | 0.0 | P |
| | 0.000 | 0.10 | 0.0 | P |
| | 0.000 | 0.00 | 2.2 | E |
| | 0.000 | 0.10 | 2.2 | E |
| C | 0.015 | 0.00 | 2.2 | E |
| | 0.015 | 0.10 | 2.2 | E |
| A | 0.000 | 0.00 | 0.0 | P |
| | 0.015 | 0.00 | 0.0 | P |
| | 0.015 | 0.10 | 0.0 | P |
| | 0.000 | 0.10 | 0.0 | P |
| | 0.000 | 0.00 | 2.2 | E |
| | 0.000 | 0.10 | 2.2 | E |
| | 0.015 | 0.00 | 2.2 | E |
| | 0.015 | 0.10 | 2.2 | E |

[1]6% Cobalt Naphthenate drier (weight % based on total of formulation).
[2]8% Zinc Naphthenate drier (weight % based on total of formulation).
[3]Weight % based on total of formulation.
[4]Samples examined after 2.5 hrs and 4 days exterior exposure; P=poor, E=excellent.

Example 3

Typical solvent based acrylic sealant formulations are as follows:

| Component | Parts | |
|---|---|---|
| | Formulation A | Formulation B |
| Duramite[1] | 587.3 | 587.3 |
| Thixatrol ST[2] | 51.6 | 51.6 |
| Ti-Pure 901[3] | 25.5 | 25.5 |
| Polymer F | 430.0 | — |
| Polymer B | 184.8 | — |
| Polymer C | — | 614.8 |
| Xylene | 22.2 | 22.2 |
| Cobalt Naphthenate (6%) | 0.65 | 0.65 |
| Zinc Naphthenate (8%) | 3.2 | 3.2 |
| Silane A-174[4] | 1.4 | 1.4 |
| Exkin No. 2[5] | 0.5 | 0.5 |

[1]$CaCO_3$, Thompson, Weinman & Co.
[2]Baker Castor Oil
[3]$TiO_2$, E. I. Du Pont
[4]*gamma*-methacrylopropyl trimethoxysilane, Union Carbide Corporation
[5]methyl ethyl ketoxime, Tenneco

A measured quantity of a 44% benzophenone solution in xylene is added to the formulated sealants. The concentrations of benzophenone investigated are 0.00, 0.26, 0.44 and 0.88 (weight % based on total of formulation) in one experiment and 0.00, 0.022, 0.065, 0.13 and 0.26 (weight % based on total of formulation) in a second experiment. The acrylic sealant formulations are mixed, skived into slabs, placed under exterior exposure cure conditions and subsequently examined on a periodic basis for relative surface tack and/or the tack free time as described in Federal Specification TTS-00230C. Appropriate controls which contain no benzophenone are included for comparison. The data in Tables III and IV indicate a dramatic improvement in surface tack over the entire range of benzophenone investigated.

TABLE III
Surface tack of standard sealant formulations which contain benzophenone

| Formulation | % Benzophenone post added | 5 Hr., exterior exposure | | 5 Hr., CTR | | 4 Day, exterior exposure | | 4 Day CTR | |
|---|---|---|---|---|---|---|---|---|---|
| | | (a) | (b) | (a) | (b) | (a) | (b) | (a) | (b) |
| B | 0.00 | $P^+$ | Fail | P | Fail | $F^-$ | Pass | $P^+$ | Pass |
| | 0.26 | $F^+$ | Pass | P | Fail | E | Pass | $P^+$ | Pass |
| | 0.44 | $G^-$ | Pass | P | Fail | $E^+$ | Pass | $P^+$ | Pass |
| | 0.88 | G | Pass | P | Fail | $E^{++}$ | Pass | $P^+$ | Marginal |
| A | 0.00 | $P^+$ | Fail | P | Fail | $F^-$ | Pass | $P^+$ | Pass |
| | 0.26 | $F^+$ | Pass | P | Fail | E | Pass | $P^+$ | Pass |
| | 0.44 | $G^-$ | Pass | P | Fail | $E^+$ | Pass | $P^+$ | Marginal |
| | 0.88 | G | Pass | P | Fail | $E^{++}$ | Pass | $P^+$ | Fail |

(a) Relative Surface Tack; E=excellent, G=Good, F=fair, P=poor.
(b) Tack Free Time Test as described in Federal Specification TTS-00230C
CTR=Controlled Temperature Room, 21.1—23.9°C (70—75°F), 50% Relative humidity.

TABLE IV
Surface tack of standard formulations of acrylic sealants which contain low levels of benzophenone

| Formulation | % Benzophenone post added | Cure conditions exterior exposure 5 Hrs. | 5 Days | 1 Month |
|---|---|---|---|---|
| B | 0.00 | $P^+$ | $F^-$ | F |
| | 0.022 | $F^-$ | $F^+$ | $G^+$ |
| | 0.065 | F | G | E |
| | 0.013 | $F^+$ | E | E |
| | 0.26 | $F^+$ | E | E |
| A | 0.00 | $P^+$ | $F^-$ | $F^+$ |
| | 0.022 | $F^-$ | F | E |
| | 0.065 | F | $F^-$ | E |
| | 0.13 | $F^+$ | G | E |
| | 0.26 | $F^+$ | E | E |

In order to determine what effect the post addition of benzophenone to sealant compositions may have, the consistency of typical Formulation B (above) is measured by the method of Federal Specification TTS-00230C. In accordance with this Specification the consistency of the composition is represented by its extrusion rate which is determined by measuring, in seconds, the time taken to extrude a given quantity of sealant from a standard air powered extrusion gun under a given set of conditions and the ability of the composition to maintain its consistency on storage is taken as a measure of its stability. The caulk consistency data summarized in Table V indicate that benzophenone is not detrimental to stability. Samples stored for 2 wk. at 50°C continue to show dramatic improvement in surface tack under exterior exposure cure conditions relative to the control.

TABLE V
Caulk stability of sealant of formulation B

| | | |
|---|---|---|
| % Benzophenone (weight % based on total of formulation) | 0.00 | 0.26 |
| Caulk consistency, sec. Initial | 5.0 | 4.5 |
| 2 wk 50°C | 6.0 | 6.0 |
| 4 wk 50°C | 6.0 | 6.0 |
| 4 wk room temperature | 5.0 | 5.0 |

Example 4

A typical solvent based roof mastic formulation is as follows:

Formulation C

| Component | Parts |
|---|---|
| Duramite | 600 |
| Thixatrol ST | 40 |
| Ti-Pure 901 | 70 |
| Polymer F | 460 |
| Cobalt Naphthenate | 0.50 |
| Zinc Naphthenate | 2.4 |
| Exkin No. 2 | 0.4 |
| Varsol #1[1] | 400 |

[1]Solvent, EXXON

Known amounts of a 44% benzophenone solution in xylene are added to the formulated roof mastic detailed in Table V. The concentrations of benzophenone investigated are 0.22, 0.44 and 0.88%, based on the total weight of the formulated roof mastic. The roof mastic formulation is mixed, brushed onto aluminum or galvanized sheet metal, placed under exterior exposure cure conditions and subsequently examined on a periodic basis for relative surface tack under exterior exposure cure

conditions. Appropriate controls which contain no benzophenone are included for comparison. The data in Table VI indicate a dramatic improvement in surface tack over the entire range of benzophenone investigated.

TABLE VI
Effect of benzophenone on the surface tack of a roof mastic

| % Benzophenone | Cure conditions: 1 Day exterior | 1 Day CTR | 6 Days exterior |
|---|---|---|---|
| 0.88 | $F^+$ | P | E |
| 0.44 | F | P | E |
| 0.22 | $P^+$ | P | E |
| 0.00 | P | P | F |

Example 5

This example shows the effect on curing under outdoor exposure conditions of a typical aqueous latex polymeric binder.

Various amounts (2.8, 1.4 and 0.7 weight % based on total of formulation) of a 44% benzophenone solution in xylene are post added to Polymer G. The blends are mixed, poured into molds, placed under exterior exposure cure conditions and subsequently evaluated on a periodic basis for relative surface tack. Appropriate controls which contain no benzophenone are included for comparisons. The data in Table VII indicate a dramatic improvement in surface tack over the entire range of benzophenone investigated.

TABLE VII
Effect of post-addition of benzophenone to an aqueous latex polymer

| Wt. % Benzophenone | Wt. % Xylene | 1.5 hrs. Exterior | 18 hrs. Exterior | 18 hrs. CTR | 18 hrs. CTR +2 days Exterior[1] |
|---|---|---|---|---|---|
| 2.8 | 3.4 | $G^+$ | E | P | E |
| 1.4 | 3.4 | G | $G^+$ | — | — |
| 0.7 | 3.4 | $F^+$ | G | — | — |
| 0.0 | 3.4 | P | F | P | P |
| 0.0 | 0.0 | P | F | P | P |

[1]Same samples as 18 hrs. CTR subsequently placed outside for 2 days.

Example 6

This example shows the selectivity of benzophenone and derivatives thereof over other known photosensitizers in the present invention.

Known amounts (0.3 to 0.5 g) of stock solutions (30—44% in xylene) of various benzoyl (benzaldehyde, acetophenone, benzophenone, benzil, 5-phenyl-2, 4-pentadieneophenone) derivatives are added to 20 g of a solvent and a water based acrylic binder, namely, Polymer C (referred to in Example 1) and Polymer G (referred to in Example 5), respectively. The samples are mixed, placed under exterior exposure conditions and subsequently periodically examined. Only benzophenone of the group of benzoyl derivatives showed any significant photo-chemical activity with either the solvent or water based acrylic binder.

Example 7

This example shows the relative effect of benzophenone and various benzophenone derivatives when post added to typical polymeric binders used in the invention. 0.5 g of stock solutions (30% in xylene) of various substituted benzophenone derivatives are added to 20 g of a solvent and a water based acrylic binder, namely, Polymer C (referred to in Example 1) and Polymer G (referred to in Example 5) respectively. The samples are mixed, placed under exterior exposure conditions and subsequently periodically examined. The results summarized in Table VIII indicate, in comparison to benzophenone itself as control, no change in photochemical activity due to para substitution and a significant loss in photochemical activity for ortho and meta substitution. The relative results for the solvent based binder closely parallels the data for the water based system.

TABLE VIII
Mono ring substitution and its relation to the surface tack of caulk binders under exterior exposure cure conditions

Low photochemical activity

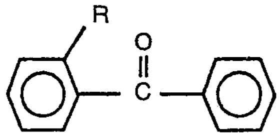

R=$NH_2$, OH

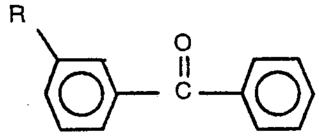

R=$NO_2$,

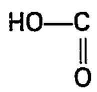

Moderate photochemical activity

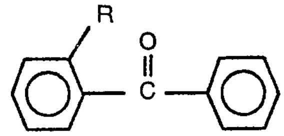

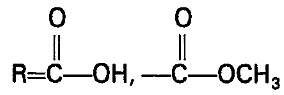

Dramatic photochemical activity

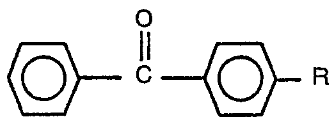

R=H, $CH_3$, OH, $NH_2$, Cl, COOH

Example 8

This example shows the effect on curing and on mildew resistance of a typical solvent based sealant formulation, namely, Formulation B set forth in Example 3 above, to which is post-added varying amounts of benzophenone. The sealant formulations are mixed, skived into slabs, placed under exterior exposure cure conditions for about nine months and then examined for relative dirt pick-up (as an indicator of relative surface tack) and for relative occurrence of mildew. The data on Table IX indicate a dramatic improvement in surface tack and in mildew resistance over the entire range of benzophenone investigated.

TABLE IX
Relative dirt pick-up and mildew resistance of a standard solvent-based sealant formulation[1] containing benzophenone

| % Benzophenone[2] | Relative dirt pick up[3] | Relative mildew[3] |
|---|---|---|
| .00 | 0 | 5 |
| .065 | 8 | 9 |
| .13 | 9 | 10 |
| .22 | 9 | 10 |
| .27 | 9 | 10 |

[1]Formulation B of Example 3
[2]Weight % based on total of formulation.
[3]Scale: 10=Excellent to 0=Poor

Example 9

This example shows the effect on curing and on mildew resistance of typical latex caulk formulations as follows:

| Component | Parts<br>Formulation D | <br>Formulation E |
|---|---|---|
| Polymer H | 430.2 | 430.2 |
| Triton X-405 | 9.5 | 9.5 |
| Calgon T[2] | 10.7 | 10.7 |
| Paraplex WP-1[3] | 124.2 | — |
| Benzoflex 9-88[4] | — | 124.2 |
| Varsol #1[5] | 26.9 | 26.9 |
| Tamol[6] | 1.3 | 1.3 |
| Camel Tex[7] | 692.1 | 692.1 |
| Ti-Pure R-901[8] | 17.7 | 17.7 |

[1]Surfactant, Rohm and Haas Company
[2]Dispersant, Calgon Corporation
[3]Plasticizer, Rohm and Haas Company
[4]Plasticizer, Velsicol Chemical Corporation
[5]Solvent,
[6]Dispersant, Rohm and Haas Company
[7]Calcite filler, Harry T. Campbell Sons Corporation
[8]$TiO_2$, E. I. du Pont

The latex caulk formulations are mixed, skived into slabs, placed under exterior exposure cure conditions for about nine months and then examined for relative dirt pick-up (as an indicator of relative surface tack) and for relative occurrence of mildew. The caulk formulations are prepared with and without benzophenone and with two different plasticizers. One of the plasticizers, Paraplex WP-1, (D) is known to be associated with absence of mildew growth whereas the other, Benzoflex 9-88, (E) is known to be associated with severe mildew growth. The data in Table X shows that the addition of benzophenone to the formulation containing the known mildew resistant plasticizer does not afford any noticeable improvement in relative dirt pick-up or mildew resistance. On the other hand, the data in Table X shows that the addition of benzophenone to the formulation containing the plasticizer known to be relatively non-resistant to mildew affords significant improvement in dirt pick-up and mildew resistance.

TABLE X
Relative dirt pick-up and mildew resistance of standard aqueous latex caulk formulations containing benzophenone

| Formulation | % Benzophenone[1] | Relative dirt pick-up[2] | Relative mildew[2] |
|---|---|---|---|
| D | 0.00 | 9 | 10 |
| D | 0.67 | 9 | 10 |
| E | 0.00 | 3 | 3 |
| E | 0.67 | 6 | 8 |

[1]weight % based on total of formulation
[2]Scale: 10=Excellent to 0=Poor.

Example 10

This example shows the outstanding balance of low temperature flexibility and dirt pick-up resistance that is achieved in low Tg polymer formulations when cured with benzophenone. The data in Table XI shows that incorporation of benzophenone provides improved resistance to dirt pick-up without sacrificing the flexibility of the composition. A more desirable balance of low temperature flexibility and relative dirt pick-up is achieved with a polymer having a Tg of −48°C than with a polymer having a Tg of +8°C.

TABLE XI
Low temperature flexibility and dirt pick-up resistance in roof mastic formulation[1]

| Polymer | G | G | I | I |
|---|---|---|---|---|
| Calc. Tg°C | −48 | −48 | +8 | +8 |
| Benzophenone (<1% on polymer solids) | no | yes | no | yes |
| Low temperature flexibility | | | | |
| −9.4°C (15°F) | Pass[2] | Pass[2] | Fail[3] | Fail[3] |
| −26.1°C (−15°F) | Pass[2] | Pass[2] | Fail[3] | Fail[3] |
| −34.4°C (−30°F) | Pass[2] | Pass[2] | Fail[3] | Fail[3] |
| Relative dirt pick-up[4] | | | | |
| 14 months | Fair | Excellent | — | — |
| 6 months | Fair | Excellent | Good | Excellent |

[1]Formulation of Example 4 except for substitution of indicated polymer.
[2]180° bend.
[3] Bend about 50.4 mm (2 inch) diameter mandrel.
[4]Exterior exposure of 40 mil thick free mastic.

**Claims**

1. A putty-like mastic, caulking, sealant or adhesive composition comprising
(a) from 10% to 90% by weight, solids basis, of a polymeric binder; and
(b) from 90% to 10% by weight, solids basis, of one or more of the following additives:
an emulsifier, a dispersant, an organic solvent, a base, a pigment, a filler, a dye, a defoamer, a thickener, a polyvalent metal-containing complex or salt as a drier, an adhesion promoter, and a plasticizer;
said polymeric binder being an addition polymer having a backbone of copolymerized ethylenically unsaturated monomers, one of which is an unsaturated carboxylic acid monomer, a portion of said carboxylic acid monomer optionally being modified by having pendant groups selected from ester-amide and ester groups, the polymer backbone having units of the formula

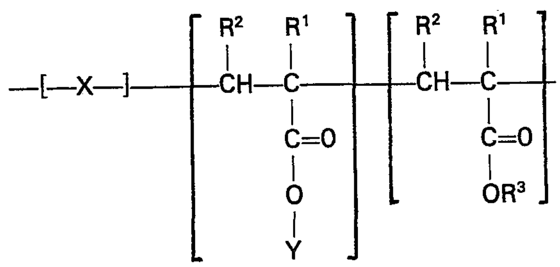

I

wherein

$R^1$ is H, ($C_1$—$C_5$) alkyl, halogen, —$CH_2COOR^8$, —$COOR^9$, or —$CH_2COOH$, wherein $R^8$ and $R^9$ are ($C_1$—$C_8$) alkyl;
$R^2$ is H, —COOH, —$CONH_2$, or —$COOR^{10}$, wherein $R^{10}$ is ($C_1$—$C_8$) alkyl;
$R^3$ is H or ($C_1$—$C_8$) alkyl radical, with the proviso that at least some of the $R^3$ groups are H,
X represents units derived from at least one other vinyl monomer and is optional; and
Y is (—$R^4$—$NR^5$—CO—$R^6$) or —(—$R^7$—O—CO—$R^6$) wherein $R^4$ is an alkylene radical having from 2 to 18 linear carbon atoms between the nitrogen and the oxygen atoms; $R^5$ is H or ($C_1$—$C_8$) alkyl; $R^6$ is an unsaturated, oxidatively air-curable alkenyl radical; and $R^7$ is —$CH_2$—CH(OH)—$CH_2$— or —CH($CH_2$OH)—$CH_2$—;

the units in parenthesis being in any order, which polymer, when it is so modified, is derived from the esterification of some of the carboxyl groups in the backbone by an unsaturated fatty acid hydroxyamide or an unsaturated fatty acid glycidyl ester, the amount of unsaturated carboxylic acid in the backbone, before or without modification, being from 0.25% to 40 weight % on the basis of copolymerized monomers, the molar ratio of free carboxyl groups in the hydroxyamide or glycidyl ester being from about 1:0.9 to 1:0.2, the polymer backbone having from 0% to no more than 10% by weight of the units having the formula

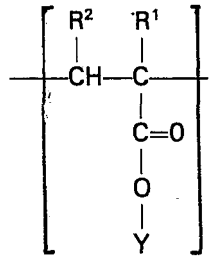

II

the Tg of the backbone polymer free of pendant ester-amide or ester groups being below 0°C; characterized in that the composition contains from 0.01 to 1% by weight, based on the weight of polymer solids, of a photosensitive compound of the formula:

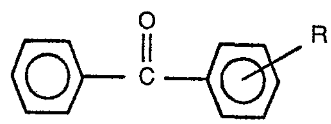

wherein R is H, 4—$CH_3$, 4—OH, 4—$NH_2$, 4—Cl, 4—COOH, 4—$COOCH_3$, 2—COOH, 2—$COOCH_3$, 2—$NH_2$, 2—OH, 3—$NO_2$, 3—COOH or 3—$COOCH_3$.

2. A composition as claimed in claim 1, wherein the polymer is rubbery and contains from 1 to 5% by weight of carboxylic acid units, $R^1$ is H or ($C_1$—$C_5$) alkyl, $R^2$ is H, and when units (B) are present they comprise no more than 5% by weight, are provided by esterification in said mole ratio of from 1:0.7 to 1:0.3 and when Y is —$R^4$—$NR^5$—CO—$R^6$ $R^5$ is methyl and $R^6$ contains 18 carbon atoms or less, and when Y is —$R^7$—O—CO—$R^6$, $R^6$ contains from 10 to 22 carbon atoms, $R^4$ and $R^7$ being as defined in claim 1.

3. A composition as claimed in claim 2, wherein $R^1$ is H or methyl, Y is —$R^4$—$NR^5$—CO—$R^6$ wherein $R^4$ contains 2 or 3 carbon atoms in a chain joining the nitrogen and oxygen atoms, $R^5$ is methyl and $R^6$ contains 18 carbon atoms or less and said mole ratio is from 1:0.6 to 1:0.4.

4. A composition as claimed in claim 1, 2 or 3, wherein $R^6$ is derived from at least one of linoleic, oleic and linolenic acids.

5. A composition as claimed in any one of claims 1—4, wherein the binder polymer contains a major proportion of units of at least one ester of acrylic acid with an alkanol containing from 1 to 4 carbon atoms and a minor proportion of units of one or more of at least one ester of methacrylic acid with an alkanol containing from 1 to 4 carbon atoms, acrylonitrile, methacrylonitrile, acrylic acid and methacrylic acid.

**Revendications**

1. Composition de masticage, d'étanchéité, d'obturation ou adhésive semblable à un mastic comprenant:

a) de 10% à 90% en poids, en matières sèches, d'un liant polymère; et

b) de 90% à 10% en poids, en matières sèches, d'un ou plusieurs des additifs suivants: un émulsifiant, un dispersant, un solvant organique, une base, un pigment, une charge, un colorant, un antimousse, un épaississant, un complexe ou sel contenant un métal polyvalent comme siccatif, un promoteur d'adhésion et un plastifiant; ledit liant polymère étant un polymère d'addition ayant un tronc en monomères à insaturation éthylénique copolymérisés dont un est un acide carboxylique insaturé monomère, une portion dudit acide carboxylique monomère étant éventuellement modifiée par la présence de groupes latéraux choisis parmi les groupes ester-amides et esters, le tronc du polymère ayant des motifs de formule:

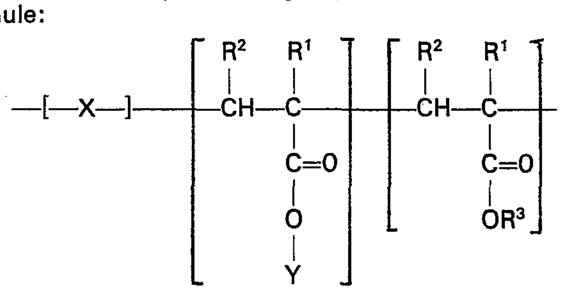

I

où:

— $R^1$ est H, un alcoyle ($C_1$—$C_5$), un halogène, —$CH_2COOR^8$, —$COOR^9$, ou —$CH_2COOH$, où

— $R^8$ et $R^9$ sont un alcoyle ($C_1$—$C_8$);

— $R^2$ est H, —COOH, —$CONH_2$, ou —$COOR^{10}$, où $R^{10}$ est un alcoyle ($C_1$—$C_8$);

— $R^3$ est H ou un radical alcoyle ($C_1$—$C_8$), sous réserve qu'au moins certains des groupes $R^3$ soient H;
— X représente des motifs dérivés d'au moins un autre monomère vinylique et est facultatif; et
— Y est (—$R^4$—$NR^5$—CO—$R^6$) ou —(—$R^7$—O—CO—$R^6$) où $R^4$ est un radical alcoylène ayant 2 à 18 atomes de carbone linéaires entre les atomes d'azote et d'oxygène; $R^5$ est H ou un alcoyle ($C_1$—$C_8$); $R^6$ est un radical alcényle insaturé durcissable par oxydation à l'air; et $R^7$ est —$CH_2$—CH(OH)—$CH_2$— ou —$CH(CH_2OH)$—$CH_2$—;

les motifs entre parenthèses étant dans un ordre quelconque, ce polymère, lorsqu'il est ainsi modifié, dérivant de l'estérification de certains des groupes carboxyle du tronc par un hydroxyamide d'acide gras insaturé ou un ester glycidylique d'acide gras insaturé, la quantité d'acide carboxylique insaturé dans le tronc, avant ou sans modification, étant de 0,25 à 40% en poids par rapport aux monomères copolymérisés, le rapport molaire des groupes carboxyle libres dans l'hydroxyamide ou l'ester glycidylique étant d'environ 1/0,9 à 1/0,2, le tronc du polymère ayant de 0% à pas plus de 10% en poids de motifs ayant pour formule:

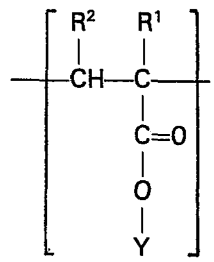

II

la Tg du tronc de polymère dépourvu de groupes latéraux ester-amides ou esters étant inférieure à 0°C; caractérisée en ce que la composition contient de 0,01 à 1% en poids par rapport au poids des matières sèches du polymère, d'un composé photosensible de formule:

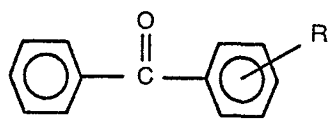

où R est H, 4—$CH_3$, 4—OH, 4—$NH_2$, 4—Cl, 4—COOH, 4—$COOCH_3$, 2—COOH, 2—$COOCH_3$, 2—$NH_2$, 2—OH, 3—$NO_2$, 3—COOH ou 3—$COOCH_3$.

2. Composition selon la revendication 1 dans laquelle le polymère est caoutchouteux et contient de 1 à 5% en poids de motifs d'acide carboxylique, $R^1$ est H ou un alcoyle ($C_1$—$C_5$), $R^2$ est H, et lorsque les motifs (B) sont présents, ils ne constituent pas plus de 5% du poids, et ils sont fournis par estérification dans ledit rapport molaire de 1/0,7 à 1/0,3, et lorsque Y est —$R^4$—$NR^5$—CO—$R^6$, $R^5$ est un méthyle et $R^6$ contient 18 atomes de carbone ou moins, et lorsque Y est —$R^7$—O—CO—$R^6$, $R^6$ contient 10 à 22 atomes de carbone, $R^4$ et $R^7$ étant comme définis dans la revendication 1.

3. Composition selon la revendication 2, dans laquelle $R^1$ est H ou un méthyle, Y est —$R^4$—$NR^5$—CO—$R^6$ où $R^4$ contient 2 ou 3 atomes de carbone dans une chaîne unissant les atomes d'azote et d'oxygène, $R^5$ est un méthyle et $R^6$ contient 18 atomes de carbone ou moins, et ledit rapport molaire est de 1/0,6 à 1/0,4.

4. Composition selon l'une quelconque des revendications 1, 2 ou 3, dans laquelle $R_6$ dérive d'au moins l'un des acides linoléique, oléique et linolénique.

5. Composition selon l'une quelconque des revendications 1 à 4, dans laquelle le liant polymère contient une proportion majeure de motifs d'au moins un ester de l'acide acrylique et d'un alcanol contenant 1 à 4 atomes de carbone et une proportion mineure de motifs d'un ou plusieurs d'au moins un ester d'acide méthacrylique avec un alcanol contenant 1 à 4 atomes de carbone, l'acrylonitrile, le méthacrylonitrile, l'acide acrylique et l'acide méthacrylique.

**Patentansprüche**

1. Kittähnliche Zusammensetzung zum Spachteln, Kalfatern, Abdichten und/oder Kleben mit einem Gehalt an

a) 10 bis 90 Gew.-%, bezogen auf Feststoffe, eines polymeren Bindemittels und

b) 90 bis 10 Gew.-%, bezogen auf Feststoffe, eines oder mehrerer der folgenden Zusatzstoffe:

Emulgiermittel, Dispergiermittel, organisches Lösungsmittel, Base, Pigment, Füllstoff, Farbstoff, Antischaummittel, Eindickmittel, Komplex oder Salz mit einem Gehalt an einem polyvalenten Metall als Trockenmittel, Adhäsionspromotor und Plastifiziermittel,

wobei es sich beim polymeren Bindemittel un eine Additionspolymer mit einem Rückgrat aus copolymerisierten, ethylenisch ungesättigten Monomeren handelt, von denen eines ein ungesättigtes Carbonsäuremonomer ist, von dem ein Teil gegebenenfalls modifiziert ist durch daran geknüpfte

Gruppen bestehend aus Esteramid- und Estergruppen, wobei das Polymerrückgrat Einheiten der folgenden Formel I aufweist

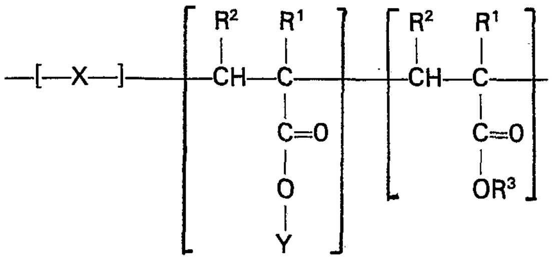

I

worin bedeuten:

$R^1$ H, $(C_1—C_5)$Alkyl, Halogen, $—CH_2COOR^8$, $—COOR^9$ oder $—CH_2COOH$, wobei $R^8$ und $R^9$ $(C_1—C_8)$Alkyl ist,
$R^2$ H, —COOH, $—CONH_2$, oder $—COOR^{10}$, wobei $R^{10}$ $(C_1—C_8)$Alkyl ist,
$R^3$ H oder $(C_1—C_8)$Alkyl, wobei gilt, daß mindestens einige der Reste $R^3$ H bedeuten,
X Einheiten, die von mindestens einem anderen Vinylmonomer abstammen und nur gegebenenfalls vorliegen, und
Y $(—R^4—NR^5—CO—R^6)$ oder $—(—R^7—O—CO—R^6)$, wobei $R^4$ Alkylenrest mit 2 bis 18 linearen Kohlenstoffatomen zwischen dem Stickstoff- und dem Sauerstoffatom; $R^5$ H oder $(C_1—C_8)$Alkyl; $R^6$ ein ungesättigter oxidativ durch Luft härtbarer Alkenylrest; und $R^7$ $—CH_2—CH(OH)—CH_2—$ oder $CH(CH_2OH)—CH_2—$ bedeuten,

wobei die in Klammern gesetzten Einheiten in beliebiger Reihenfolge vorliegen, wobei das Polymer, wenn es wie angegeben modifiziert ist, von der Veresterung einiger der im Polymerrückgrat vorliegenden Carboxylgruppen durch ein ungesättigtes Fettsäurehydroxyamid oder einen ungesättigten Fettsäureglycidylester stammt, wobei die Menge an das Polymerrückgrat aufbauenden ungesättigten Carbonsäuren vor der oder ohne Modifizierung 0,25 bis 40 Gew.-%, bezogen auf die copolymerisierten Monomere, beträgt und wobei das molare Verhältnis von freien Carboxylgruppen in dem Hydroxyamid oder Glycidylester etwa 1:0,9 bis 1:0,2 ausmacht, wobei das Polymerrückgrat 0 bis nicht mehr als 10 Gew.-% Einheiten der folgenden Formel II aufweist

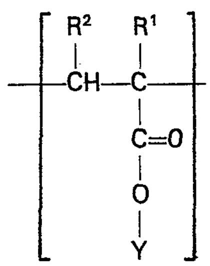

II

und wobei die Tg des von daran geknüpften Esteramidoder Estergruppen freien Rückgratpolymeren unter 0°C liegt, dadurch gekennzeichnet, daß die Zusammensetzung 0,01 bis 1 Gew.-%, bezogen auf das Gewicht der Polymerfeststoffe, einer fotosensitiven Verbindung der Formel

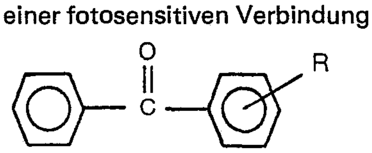

aufweist, worin R H, $4—CH_3$, 4—OH, $4—NH_2$, 4—Cl, 4—COOH, $4—COOCH_3$, 2—COOH, $2—COOCH_3$, $2—NH_2$, 2—OH, $3—NO_2$, 3—COOH oder $3—COOCH_3$ bedeutet.

2. Zusammensetzung nach Anspruch 1, dadurch gekennzeichnet, daß das Polymer gummiartig ist und 1 bis 5 Gew.-% Carbonsäureeinheiten enthält mit $R^1$=H oder $(C_1—C_5)$Alkyl und $R^2$=H, und daß bei Vorliegen von Einheiten (B) diese nicht mehr als 5 Gew.-% ausmachen und aus der Veresterung im angegebenen Molverhältnis von 1:0,7 bis 1:0,3 stammen, und daß dann, wenn Y $—R^4—NR^5—CO—R^6$ bedeutet, $R^5$ Methyl und $R^6$ einen Rest mit 18 Kohlenstoffatomen oder weniger darstellen, und daß dann, wenn Y $—R^7—O—CO—R^6$ bedeutet, $R^6$ 10 bis 22 Kohlenstoffatome enthält, wobei $R^4$ und $R^7$ die in Anspruch 1 angegebene Bedeutung haben.

3. Zusammensetzung nach Anspruch 2, dadurch gekennzeichnet, daß $R^1$ H oder Methyl und Y $—R^4—NR^5—CO—R^6$ bedeuten, wobei $R^4$ 2 oder 3 Kohlenstoffatome in einer das Stickstoff- und Sauerstoffatom verbindenden Kette enthält, $R^5$ Methyl ist und $R^6$ 18 Kohlenstoffatome oder weniger enthält, und daß das angegebene Molverhältnis 1:0,6 bis 1:0,4 beträgt.

4. Zusammensetzung nach Ansprüchen 1, 2 oder 3, dadurch gekennzeichnet, daß $R^6$ aus mindestens einer der Carbonsäuren Linolsäure, Ölsäure und Linolensäure stammt.

5. Zusammensetzung nach Ansprüchen 1 bis 4, dadurch gekennzeichnet, daß das Bindemittelpolymer einen größeren Anteil an Einheiten aus mindestens einem Ester von Acrylsäure mit einem Alkanol mit 1 bis 4 Kohlenstoffatomen und einen kleineren Anteil an Einheiten aus einer oder mehreren Verbindungen bestehend aus mindestens einem Ester von Methacrylsäure mit einem Alkanol mit 1 bis 4 Kohlenstoffatomen, Acrylonitril, Methacrylonitril, Acrylsäure und Methacrylsäure aufweist.